# EUROPÄISCHE PATENTANMELDUNG

(11) **EP 1 790 834 A1**
(43) Veröffentlichungstag der Anmeldung: **30.05.2007**
(21) Anmeldenummer: 06112594.4
(22) Anmeldetag: 13.04.2006
(51) Int. Cl.: F01K 21/04, F02C 7/27

(54) **Turbogruppe mit Anfahrvorrichtung**

(30) Priorität: 18.04.2005 CH 6882005
(71) Anmelder: Alstom Technology Ltd, 5400 Baden (CH)
(72) Erfinder: Althaus, Rolf, 8704, Herrliberg (CH)

(57) **Zusammenfassung**

Die Erfindung betrifft eine Turbogruppe (100) mit Anfahrvorrichtung (120). Die Turbogruppe umfasst einen Verdichter (102), eine Brennkammer (103) und eine Turbine (104), die entlang eines Strömungspfades der Turbogruppe angeordnet sind. Die Anfahrvorrichtung (120) dient zum Anfahren der Turbogruppe und umfasst einen Dampferzeuger (121) zur Erzeugung von unter Überdruck stehendem Dampf und eine Zuführleitung (125) zur Zuführung des Dampfes in den Strömungspfad (101) der Turbogruppe (100).

Ferner betrifft die Erfindung ein Verfahren zum Anfahren der Turbogruppe. Das Verfahren umfasst, unter Überdruck stehenden Dampf zu erzeugen und den Dampf in den Strömungspfad der Turbogruppe zuzuführen.

## Beschreibung

### Technisches Gebiet

Die Erfindung betrifft eine Turbogruppe mit Anfahrvorrichtung zum Anfahren der Turbogruppe. Ferner betrifft die Erfindung ein Verfahren zum Anfahren der Turbogruppe.

### Stand der Technik

Aus dem Stand der Technik sind mehrere Verfahren und Vorrichtungen zum Anfahren von Turbogruppen, wie beispielsweise mobilen oder stationären Gas- oder Dampfturbinenanlagen oder anderweitigen Turbogruppen, bekannt. Insbesondere bei Anlagen, die stationär zur Stromerzeugung betrieben werden, stellt das Anfahren der Turbogruppe aufgrund der hohen Leistungen der Turbogruppe verbunden mit den oftmals sehr hohen Rotorträgheiten sehr hohe Anforderungen an die Anfahrvorrichtung und die Regelung des Anfahrvorgangs.

Zum Starten einer Gasturbinenanlage kann beispielsweise ein Elektromotor eingesetzt werden, der dann zum Starten der Anlage mit der Welle des Verdichters verbunden sein muss, um so den Verdichter elektromotorisch anzutreiben. Häufig wird hierzu der Generator als Elektromotor genutzt. Der Generator ist über eine Welle mit der Turbine der Gasturbinenanlage und die Turbine wiederum über dieselbe oder eine weitere Welle mit dem Verdichter verbunden. Zum Anfahren der Anlage wird der Generator über einen statischen Frequenzumrichter, der mit elektrischer Leistung aus dem Netz gespeist wird, angesteuert und fungiert somit als Elektromotor.
Die hierfür erforderlichen statischen Frequenzumrichter sind aber teuer und erfüllen bei hochgelaufener Anlage keine Funktion.

Daher ist es in vielen Fällen kostengünstiger, die Gasturbinenanlage mittels Drucklufteinblasung zu starten. Die hierzu benötigte Druckluft entstammt einem Reservoir, das zuvor durch einen zusätzlichen Kompressor oder durch ein Abzweigen von Druckluft bei hochgelaufener Anlage gefüllt wurde.

Ein solches Anfahren einer Gasturbinenanlage mittels Drucklufteinblasung aus einem Luftspeicher ist beispielsweise aus der Patentschrift US 4 033 114 bekannt. Bei der hier beschriebenen Gasturbinenanlage sind die Wellen einer Hochdruckturbine mit vorgeschalteter Hochdruckbrennkammer und einer Niederdruckturbine mit vorgeschalteter Niederdruckbrennkammer miteinander verbunden. Ferner wird die Verbrennungsluft vom Luftspeicher der Hochdruckbrennkammer zugeführt. Das Verfahren zum Anfahren der Gasturbinenanlage umfasst hierbei die folgenden Verfahrensschritte: Zunächst wird die Gasturbine mit Luft aus dem Luftspeicher bis zur Erreichung der Betriebsdrehzahl beaufschlagt. Während des Hochfahrens der Gasturbine wird die Hochdruckbrennkammer gezündet, wobei die Eintrittstemperatur in den Hochdruckteil der Gasturbine auf einem Minimalwert gehalten wird. Anschließend wird bei Belastung der Gasturbine die Niederdruckbrennkammer gezündet und der Druck vor der Hochdruckturbine bis zum vollen Betriebsdruck erhöht. Hierbei ist die die Hoch- und Niederdruck-Turbine durchströmende Luftmenge höher als im Dauerbetrieb. Danach wird die Eintrittstemperatur vor dem Niederdruckteil der Gasturbine soweit erhöht, bis die volle Leistung der Gasturbine erreicht wird, um anschließend die Eintrittstemperatur vor dem Hochdruckteil der Gasturbine vom Minimalwert linear auf die volle Betriebstemperatur zu steigern. Gleichzeitig mit dem Steigern der Eintrittstemperatur in den Hochdruckteil wird die Eintrittstemperatur in den Niederdruckteil derart gesteigert, dass die Leistung der Gasturbine konstant bleibt und der Luftdurchsatz auf Normalwert reduziert wird.

Auch in der Patentschrift US 3 704 586 ist eine Anfahrschaltung für eine Gasturbinenanlage offenbart. Die Gasturbinenanlage umfasst hier einen Kohle-Druckvergaser, eine Entspannungsturbine mit Hochdruckverdichter und zugeordnetem Motor-Generator, einen Kessel mit angeschlossener Gasturbine und daran angekuppeltem Niederdruckverdichter sowie einen Anfahrmotor. Dem Druckvergaser ist ein Anfahr-Druckluftspeicher zugeordnet, wobei der Anfahr-Druckluftspeicher an den Hochdruckverdichter angeschlossen ist und durch einen Teilstrom der erzeugten Druckluft aufgeladen wird. Der Anfahr-Druckluftspeicher ist hierbei so bemessen, dass die hierin gespeicherte Druckluft genügt, um beim Anfahren der Anlage eine Mindest-Anzahl von Druckvergaseraggregaten mittels Druckluft aus dem Druckluftspeicher zu starten. Hierdurch lassen sich die zusätzlich vom Motor-Generator motorisch angetriebene Turbine und die zunächst vom Anfahrmotor angetriebene Gasturbine so weit auf Leistung bringen, dass letztlich die Gesamtanlage zunächst im Leerlauf eigenständig betrieben werden kann.

Nachteilig an der Lösung, eine Gasturbinenanlage mittels Drucklufteinblasung zu starten, ist jedoch, dass ein verhältnismäßig großes Reservoir zur Verfügung stehen müssen, um hinreichend Druckluft speichern zu können. Insbesondere bei großen stationären Gasturbinenanlagen kann dies nur über sehr große Speichervolumina realisiert werden, die im Bau verhältnismäßig hohe Kosten verursachen. Auch muss nach einem Startvorgang der Anlage das Reservoir zunächst wieder aufgefüllt werden, bevor ein erneuter Startvorgang durchgeführt werden kann. Wird beispielsweise ein Startvorgang der Anlage im Erstversuch abgebrochen, so kann üblicherweise ein zweiter Startversuch nicht unmittelbar im Anschluss daran vorgenommen werden. Insbesondere für diesen Fall des Startabbruchs muss die Anlage zusätzlich noch mit einem weiteren Kompressor ausgestattet sein, um das Reservoir mit Hilfe des Kompressors wieder befüllen zu können.

### Darstellung der Erfindung

Hier will die Erfindung Abhilfe schaffen. Der Erfindung liegt somit die Aufgabe zugrunde, eine Turbogruppe mit Anfahrvorrichtung der eingangs genannten Art anzugeben, mit der die Nachteile des Standes der Technik vermindert oder vermieden werden. Des Weiteren soll durch die Erfindung ein Verfahren zum Anfahren einer solchen Turbogruppe zur Verfügung gestellt werden.
Die Erfindung trägt insbesondere dazu bei, eine in Relation zu den aus dem Stand der Technik bekannten Lösungen kostengünstige Anfahrvorrichtung bei gleichzeitig verhältnismäßig geringem Raumbedarf für die Anfahrvorrichtung zur Verfügung zu stellen. Auch sollen Mehrfachstarts der Turbogruppe mit jeweils nur kurzen Zeitabständen zwischen den Startvorgängen mittels der Anfahrvorrichtung möglich sein.

Diese Aufgabe wird erfindungsgemäß durch die Turbogruppe mit Anfahrvorrichtung gemäss Anspruch 1 sowie das Verfahren gemäss dem unabhängigen Verfahrensanspruch gelöst. Weitere vorteilhafte Ausgestaltungen der Erfindung finden sich in den Unteransprüchen.

Gemäß der Erfindung umfasst die Turbogruppe einen Verdichter, eine Brennkammer und eine Turbine, wobei Verdichter, Brennkammer und Turbine entlang eines Strömungspfades der Strömung der Turbogruppe angeordnet sind. Zum Anfahren der Turbogruppe ist der Turbogruppe des Weiteren eine Anfahrvorrichtung beigeordnet. Die Anfahrvorrichtung umfasst einen Dampferzeuger zur Erzeugung von unter Überdruck stehendem Dampf sowie eine Zuführleitung, die an einem ersten Ende mit dem Dampferzeuger verbunden ist und zur Zuführung des erzeugten Dampfes in den Strömungspfad der Turbogruppe an einem zweiten Ende in den Strömungspfad der Turbogruppe einmündet. Zweckmäßig ist die Zuführleitung verschließbar ausgeführt.
Insofern ähnelt der Aufbau der erfindungsgemäß ausgebildeten Turbogruppe mit Anfahrvorrichtung den aus dem Stand der Technik bekannten Turbogruppen, bei denen zum Anfahren eine Drucklufteinblasung zur Einblasung von Druckluft vorgesehen ist. Jedoch wird im Falle der Erfindung zum Anfahren der Turbogruppe an Stelle von verdichteter Luft Dampf in den Strömungspfad der Turbogruppe zugeführt und die Turbogruppe hierdurch gestartet. Der hierfür erforderliche Dampf wird zum Zeitpunkt der Zuführung oder unmittelbar davor in dem Dampferzeuger erzeugt. Im Vergleich zur Einblasung von verdichteter Luft bietet dies den Vorteil, dass keine Speicherung des zuzuführenden Dampfes in gasförmigem Aggregatzustand erforderlich ist. Vor der Verdampfung liegt der Dampf in flüssigem Aggregatzustand vor und macht somit ein nur geringes Speichervolumen erforderlich. Ferner lässt sich mittels eines oder auch mehrerer Dampferzeuger zum Zeitpunkt des Anfahrens der Turbogruppe Dampf in hinreichender Menge erzeugen, um auch große stationär betriebene Turbogruppen, beispielsweise zur Stromerzeugung betriebene Gas- oder Dampfturbinenanlagen oder auch Kombianlagen, mittels Dampfzuführung anfahren zu können. Weiterhin ist es möglich, die Speichervolumina für die Speicherung des in flüssigem Aggregatzustand zu speichernden, für die Dampferzeugung benötigten Ausgangsfluids ohne große bauliche Anforderungen auch hinreichend groß auszuführen, um ein mehrfaches Wiederholen des Startvorgangs in kurzen Zeitabständen zueinander möglich zu machen.
Ein bedeutender Vorteil der erfindungsgemäßen Lösung besteht darin, dass auch Altanlagen in einfacher Weise ohne großen apparativen Aufwand mit einer erfindungsgemäß ausgebildeten Anfahrvorrichtung nachgerüstet werden können. Auch bei Gasturbinen stellt die kurzzeitige Zuführung von Dampf zum Anfahren der Gasturbine kein Problem dar, da der Dampf nur während des Startvorgangs und somit nur kurzzeitig bei verhältnismäßig geringen Strömungsgeschwindigkeiten eingesetzt wird.

Der Ablauf des Anfahrvorgangs der Turbogruppe nach dem Zuführen des Dampfes entspricht dann im Weiteren den aus dem Stand der Technik bekannten Anfahrvorgängen von Turbogruppen. Demzufolge wird die Turbogruppe üblicherweise durch die Zuführung des Dampfes auf eine Mindestdrehzahl hochgefahren, bei der die Brennkammer gezündet werden kann und von der aus die Turbogruppe dann aus eigener Kraft weiter hochdrehen kann. Nach dem Zünden der Brennkammer kann es durchaus sinnvoll sein, Dampf noch über einen weiteren Zeitraum in den Strömungspfad zuzuführen, bevor die Zuführleitung letztendlich verschlossen und die Zuführung von Dampf somit beendet wird. Die Turbogruppe kann hierauf folgend eigenständig weiter hochgefahren oder in einem stationären Betriebspunkt betrieben.

Zusätzlich zu der Zuführung von Dampf kann die Drehzahl aber auch noch elektromotorisch erhöht oder der Anfahrvorgang hierdurch unterstützt werden.

Bevorzugt mündet die Zuführleitung stromab des Verdichters in den Strömungspfad der Turbogruppe ein.
In einer zweckmäßigen Ausgestaltung der Erfindung mündet die Zuführleitung zwischen dem Austritt aus dem Verdichter und dem Eintritt in die Brennkammer in den Strömungspfad der Turbogruppe ein. Der zugeführte Dampf durchströmt somit nach dem Eintreten in den Strömungspfad zunächst die Brennkammer und danach die Turbine. Dies führt zu einer Erhöhung des Massendurchsatzes durch die Brennkammer, wodurch die Brennkammer frühzeitiger gezündet werden kann.

Alternativ oder ergänzend mündet die Zuführleitung zweckmäßig in die Brennkammer ein. Auch bei dieser Ausführungsform der Erfindung durchströmt der zugeführte Dampf die Brennkammer und ermöglicht so ein frühzeitigeres Zünden der Brennkammer. Durch die Zuführung des Dampfes unmittelbar in die Brennkammer kann darüber hinaus die Strömungsausbildung in der Brennkammer mit beeinflusst werden.

Alternativ oder ergänzend mündet die Zuführleitung zwischen dem Austritt aus der Brennkammer und dem Eintritt in die Turbine in den Strömungspfad ein. Die Brennkammer wird somit auch während des Anfahrvorgangs ausschließlich über den Verdichter mit Luftmassendurchsatz beliefert. Bei einem Schließen der Zuführleitung vermindert sich somit der Massenstrom, der durch die Brennkammer strömt nicht oder nur unwesentlich, so dass auch der Brennstoffmassenstrom, der der Brennkammer zugeführt wird, nicht oder nur geringfügig angepasst werden muss.

Bei einer wenigstens zweistufigen Turbine mit wenigstens einer ersten Turbinenstufe und einer zweiten Turbinenstufe kann es auch zweckmäßig sein, die Zuführleitung alternativ oder ergänzend auch zwischen der ersten und der zweiten Turbinenstufe in den Strömungspfad einmünden zu lassen. Der zugeführte Dampf entspannt dann über die stromab der Einmündung angeordnete Turbinenstufe bzw. über die stromab der Einmündung angeordneten Turbinenstufen.

In einer bevorzugten Ausführungsform der Erfindung umfasst der Dampferzeuger einen Wasserstoff-Speicher und einen Sauerstoff-Speicher sowie einen Brenner zur Verbrennung von Wasserstoff aus dem Wasserstoff-Speicher mit Sauerstoff aus dem Sauerstoff-Speicher. Der Wasserstoff und der Sauerstoff wird hierzu in dem Brenner zusammengeführt. Durch Wasserstoffreaktion entsteht dann in dem Brenner aus dem Wasserstoff und dem Sauerstoff Wasserdampf. Bei der Wasserstoffreaktion fällt somit kein weiteres Verbrennungsnebenprodukt an. Auch ist insbesondere kein weiterer fossiler Brennstoff, wie beispielsweise Diesel oder elektrische Energie, zur Dampferzeugung erforderlich.
Neben einem geringen Raumbedarf ist ein in dieser Weise ausgeführter Dampferzeuger auch erheblich weniger wartungsaufwändig als ein herkömmliches Dieselaggregat oder eine herkömmliche Hilfsgasturbine. Dies führt letztlich zu geringeren Wartungskosten, einer höheren Zuverlässigkeit des Dampferzeugers sowie auch insgesamt zu einer höheren Verfügbarkeit.
Apparativ kann auf die Anordnung eines statischen Frequenzumrichters zur Ansteuerung eines Generator-Motors während der Anlaufphase oder gar eines separaten Antriebsmotors verzichtet werden, so dass der apparative Aufbau insgesamt kostengünstiger ist als bei herkömmlich ausgeführten Anlagen.
Ferner bietet die Verbrennung von Wasserstoff und Sauerstoff in einer Wasserstoffreaktion den Vorteil, dass das Druckniveau unter dem die Verbrennungsreaktion stattfindet und somit auch der Austrittsdruck des erzeugten Dampfes gut regelbar ist. So kann in einfacher Weise, und insbesondere ohne einen Kompressor erforderlich zu machen, dafür gesorgt werden, dass der erzeugte Dampf einen hinreichenden Überdruck aufweist, um ein für die Dampfströmung hinreichendes Druckgefälle von dem Dampferzeuger bis hin zum Austritt aus der Turbogruppe vorzusehen.

Vorzugsweise umfasst die Anfahrvorrichtung zusätzlich eine Wassereindüsungseinrichtung zur geregelten Eindüsung von zusätzlichem Wasser in die Zuführleitung. Die Wassereindüsungseinrichtung kann beispielsweise eine Vielzahl von Einzeldüsen umfassen, die in die Zuführleitung einmünden. Das zusätzlich eingedüste Wasser dient einerseits der Kühlung des zugeführten Dampfes. Der Dampf weist nach der Verbrennung in dem Dampferzeuger zunächst eine relativ hohe Temperatur von in der Regel etwa 1200 K - 1300 K auf. Zum Eintritt in die Turbogruppe ist üblicherweise eine Temperatur von etwa 500 K - 600 K ausreichend. Neben dem Herabkühlen des Dampfes wird durch die Eindüsung von zusätzlichem Wasser auch noch zusätzlicher Dampf erzeugt, der entweder den Anfahrvorgang beschleunigt oder eine nur geringere Erzeugung von Dampf durch den Dampferzeuger erforderlich macht.

In einem weiteren Aspekt stellt die Erfindung ein Verfahren zum Anfahren einer Turbogruppe zur Verfügung. Die Turbogruppe umfasst einen Verdichter, eine Brennkammer und eine Turbine, wobei Verdichter, Brennkammer und Turbine entlang eines Strömungspfades angeordnet sind. Das erfindungsgemäße Verfahren umfasst die Verfahrensschritte, unter Überdruck stehenden Dampf zu erzeugen und den Dampf in den Strömungspfad der Turbogruppe, vorzugsweise stromab des Verdichters, zuzuführen. Die Vorteile des erfindungsgemäßen Verfahrens gegenüber den aus dem Stand der Technik bekannten Verfahren entsprechen den oben mit Bezug auf die erfindungsgemäß ausgeführte Turbogruppe getroffenen Ausführungen.
Der Ablauf des Anfahrvorgangs der Turbogruppe nach Zuführung des Dampfes entspricht dann im Weiteren den aus dem Stand der Technik bekannten Anfahrvorgängen von Turbogruppen. Demzufolge wird die Turbogruppe üblicherweise mittels der Zuführung des Dampfes auf eine Mindestdrehzahl hochgefahren, von der aus die Turbogruppe aus eigener Kraft weiter hochdrehen kann. Dies bedeutet, dass zum Beenden der Zuführung von Dampf die Turbogruppe auf eine Drehzahl hochgefahren sein muß, bei der der Verdichter der Turbogruppe einen hineichenden Luftmassendurchsatz fördert, um eine Zündung der Brennkammer vornehmen zu können. Nach der Zündung der Brennkammer kann die Zuführung von Dampf noch über einen weiteren Zeitraum fortgesetzt werden, bevor die Zuführung durch ein Verschließen der Zuführleitung beendet wird. Die Turbogruppe wird hieran anschließend eigenständig weiter hochgefahren oder in einem stationären Betriebspunkt betrieben.
Zusätzlich zu der Zuführung von Dampf kann die Drehzahl aber auch noch elektromotorisch erhöht oder der Anfahrvorgang hierdurch unterstützt werden.

Zweckmäßig wird der Dampf zwischen Verdichteraustritt und Brennkammereintritt und/oder in der Brennkammer und/oder zwischen Brennkammeraustritt und Turbineneintritt und/oder bei einer wenigstens zweistufig ausgeführten Turbine zwischen den Turbinenstufen dem Strömungspfad zugeführt.

Gemäß einer bevorzugten Ausgestaltung des erfindungsgemäßen Verfahrens wird der Dampf durch eine Verbrennung von Wasserstoff mit Sauerstoff erzeugt. Wasserstoff und Sauerstoff werden hierzu getrennt voneinander der Verbrennung zugeleitet und reagieren in einer Wasserstoffreaktion miteinander unter Bildung von Wasserdampf. Bei der Wasserstoffreaktion fällt vorteilhaft kein weiteres Verbrennungsnebenprodukt an. Insbesondere ist auch kein weiterer fossiler Brennstoff zur Erzeugung von Dampf nötig.
Ferner bietet die Verbrennung von Wasserstoff und Sauerstoff in einer Wasserstoffreaktion den Vorteil, dass das Druckniveau unter dem die Verbrennungsreaktion stattfindet und somit auch der Austrittsdruck des erzeugten Dampfes gut regelbar ist. So kann in einfacher Weise, und insbesondere ohne einen Kompressor erforderlich zu machen, dafür gesorgt werden, dass der erzeugte Dampf einen hinreichenden Überdruck aufweist, um ein für die Dampfströmung hinreichendes Druckgefälle von dem Dampferzeuger bis hin zum Austritt aus der Turbogruppe vorzusehen.

Zweckmäßig wird dem erzeugten Dampf vor der Zuführung in den Strömungspfad der Turbogruppe zusätzlich Wasser zugeführt. Diese Zuführung von Wasser dient einerseits der Kühlung des erzeugten Dampfes und andererseits der Erhöhung der Dampfmenge.

Das erfindungsgemäße Verfahren eignet sich zum Anfahren jeglicher Turbogruppen, insbesondere zum Anfahren von Gas- oder Dampfturbinenanlagen oder auch von Kombianlagen.

### Kurze Beschreibung der Zeichnungen

Die Erfindung wird nachfolgend anhand eines in den Figuren illustrierten Ausführungsbeispiels näher erläutert. Es zeigen:
- Figur 1: eine aus dem Stand der Technik bekannte Turbogruppe mit Drucklufteinblasung;
- Figur 2: eine erfindungsgemäß ausgebildete Turbogruppe mit Anfahrvorrichtung.

In den Figuren sind nur die für das Verständnis der Erfindung wesentlichen Elemente und Bauteile dargestellt.
Das dargestellte Ausführungsbeispiel ist rein instruktiv zu verstehen und soll einem besseren Verständnis, aber nicht einer Einschränkung des Erfindungsgegenstandes dienen.

### Wege zur Ausführung der Erfindung

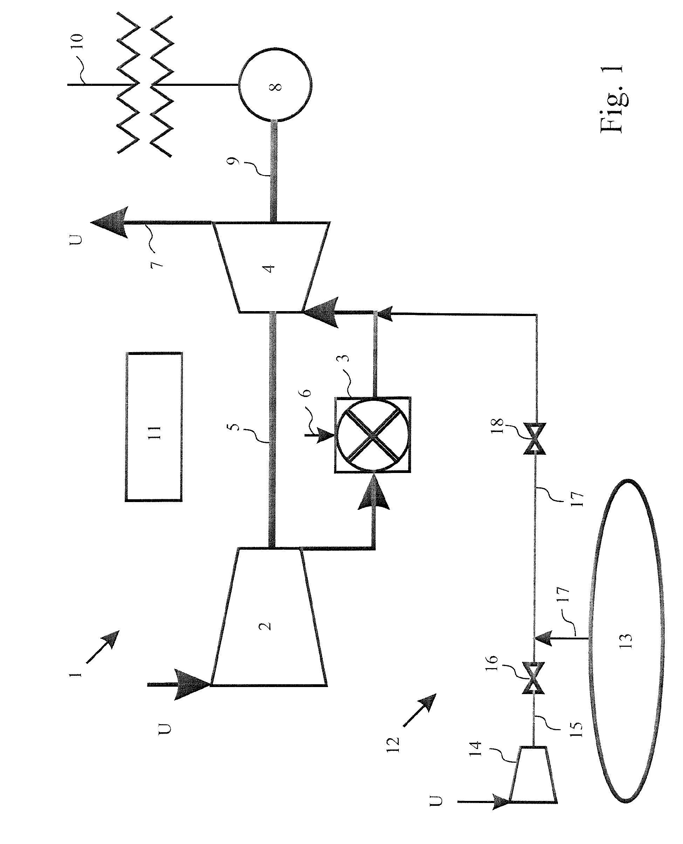

Figur 1 zeigt in einer schematischen Darstellung eine Gasturbinenanlage 1, wie sie dem Fachmann geläufig ist. Die hier als stationäre Anlage ausgeführte Gasturbinenanlage 1 dient zur Erzeugung von Strom. Die Erfindung ist aber grundsätzlich auch auf mobile Anlagen oder anderweitig eingesetzte Turbogruppen anwendbar.

Die Gasturbinenanlage 1 umfasst einen Verdichter 2, der eingangsseitig Luft aus der Umgebung U ansaugt und diese verdichtet. Der Verdichter 2 ist über eine Welle 5 mit einer Turbine 4 drehfest antriebsverbunden. In dem Gaspfad zwischen Verdichter 2 und Turbine 4 ist eine Brennkammer 3 angeordnet, die zur Feuerung über die Brennstoffzuleitung 6 mit Brennstoff beschickt wird. Nach dem Durchtritt durch die Turbine 4 entströmt das Luft-Brenngas-Gemisch über eine Abgasleitung 7 wieder in die Umgebung U. Die Turbine 4 ist über eine weitere Welle 9 mit einem Generator 8 antriebsverbunden. Die Wellen 5 und 9 können auch einteilig ausgeführt sein. Im Betrieb liefert die hier dargestellte Gasturbinenanlage 1 etwa 220 MW Leistung, die über den von der Turbine 4 angetriebenen Generator 8 in Strom umgewandelt und über eine Stromleitung und einen Transformator in ein elektrisches Netz 10 abgeführt wird. Des Weiteren umfasst die Gasturbinenanlage 1 ein Stromversorgungsaggregat 11, mit der die Gasturbinenanlage 1 speziell während der Hochlaufphase mit Strom versorgt wird.
Selbstverständlich kann die Gasturbinenanlage 1 auch mehrwellig, mit mehreren Turbinen und zwischengeordneten Brennkammern, mit mehreren Verdichtern und zwischengeordneten Kühlern und dergleichen ausgeführt sein. Diese weiteren Ausführungsformen sind dem Fachmann geläufig und stellen die Erfindung lediglich in einen dem Fachmann geläufigen Kontext, weshalb an dieser Stelle nicht weiter darauf eingegangen wird.

Um die Gasturbinenanlage 1 anfahren zu können, umfasst die in Figur 1 dargestellte Gasturbinenanlage 1 weiterhin eine Drucklufteinblasevorrichtung 12 als Anfahrvorrichtung zum Anfahren der Gasturbinenanlage. Die Drucklufteinblasevorrichtung 12 umfasst ein Reservoir 13, das von einem Kompressor 14 über die Befüllleitung 15 mit Druckluft befüllt wird. Die Befüllleitung 15 ist mittels eines in die Befüllleitung integrierten Drosselschiebers 16 verschließbar. Ferner umfasst die Drucklufteinblasevorrichtung 12 eine Verbindungsleitung 17, die ebenso mittels eines in die Verbindungsleitung 17 integrierten Drosselschiebers 18 verschließbar ist. Ein Ende der Verbindungsleitung 17 ist mit dem Reservoir 13 verbunden. Das andere Ende der Verbindungsleitung 17 mündet zwischen der Brennkammer 3 und der Turbine 4 in den Strömungspfad der Gasturbinenanlage 1. Zum Starten der Gasturbinenanlage 1 wird der Drosselschieber 18 geöffnet, so daß Druckluft aus dem Reservoir 13 über die Verbindungsleitung 17 in die Turbine 4 einströmt. Die über die Verbindungsleitung 17 in die Gasturbinenanlage eingebrachte Druckluft entspannt sodann über die Turbine 4, wodurch die Turbine 4 in Rotation versetzt wird. Über die Welle 5 wird der Verdichter 2 angetrieben, der hierdurch Luft aus der Umgebung U ansaugt und verdichtet. Ab einer gewissen Verdichterdrehzahl genügt der von dem Verdichter 2 der Brennkammer 3 zugeförderte Luftmassenstrom, um die Brennkammer 3 zünden zu können. Diese Minimaldrehzahl des Verdichters liegt in dem hier dargestellten Beispiel bei etwa 15 MW Leistungsumsatz der Gasturbinenanlage 1. Nach dem Zünden der Brennkammer 3 folgt üblicherweise eine Stabilisierungsphase, bevor die Einblasung von Druckluft in die Gasturbinenanlage beendet wird. Die Drehzahl der Anlage kann dann eigenständig durch ein Erhöhen der zugeführten Brennstoffmenge je nach Bedarf weiter gesteigert werden.

Da die zum Starten der Gasturbinenanlage 1 benötigte Druckluft nicht in ausreichender Menge zum Zeitpunkt des Startvorgangs erzeugt werden kann, muss die Druckluft bereits vor dem Starten des Einblasevorgangs in dem Reservoir 13 zur Verfügung gestellt werden. Dies erfolgt üblicherweise mittels des Kompressors 14 oder durch ein Abzweigen von Druckluft aus der Gasturbinenanlage 1 selbst. Ein solches Abzweigen von Druckluft kann natürlich nur während des Betriebs der Anlage vorgenommen werden, d.h. während des Betriebs der Anlage nur jeweils für einen späteren Startvorgang.
Die Anordnung eines zusätzlichen Kompressors 14 zum Befüllen des Reservoirs 13 hingegen verursacht hohe Kosten für die Anschaffung und den Betrieb des Kompressors 14. Auch ist ein solcher Kompressor während eines überwiegenden Anteils der Betriebsdauer der Gasturbinenanlage 1 ohne Funktion. Wird das Reservoir 13 hingegen durch Abzweigen von Druckluft während des Betriebs der Gasturbinenanlage befüllt, so muss mindestens eine Erstbefüllung des Reservoirs 13 mit Hilfe eines Zusatzkompressors erfolgen. Auch kann es beispielsweise nach einem abgebrochenen Startvorgang der Gasturbinenanlage 1 erforderlich sein, das Reservoir wieder aufzufüllen, da die noch in dem Reservoir verbliebene Druckluftmenge für einen zweiten Startvorgang nicht mehr ausreichend ist. Wie auch bei dem allerersten Startvorgang ist in diesen Fällen ein Befüllen des Reservoirs mittels eines zusätzlichen Kompressors erforderlich.
Ein weiterer sehr großer Nachteil stellt das verhältnismäßig große bauliche Volumen für das Reservoir 13 dar. Da ausreichend Druckluftmenge in dem Reservoir gespeichert sein muss, um die Gasturbine auf etwa ein Zehntel der Leistung der Gasturbine im Auslegungspunkt hochzufahren, sind die Reservoirs üblicherweise mit großen Volumina von mehreren hundert Kubikmetern vorzusehen. In der in der US 3 704 586 beschriebenen Anlage umfasst das mit 12 gekennzeichnete Reservoir 400 Kubikmeter bei einem Betriebsdruck von 36 bar. Derart große druckfeste Volumina erfordern baulich aufwändige Maßnahmen und erhöhen dadurch die Kosten für eine solche Anlage. Auch kann der für das Reservoir benötigte Bauraum nicht anderweitig genutzt werden.

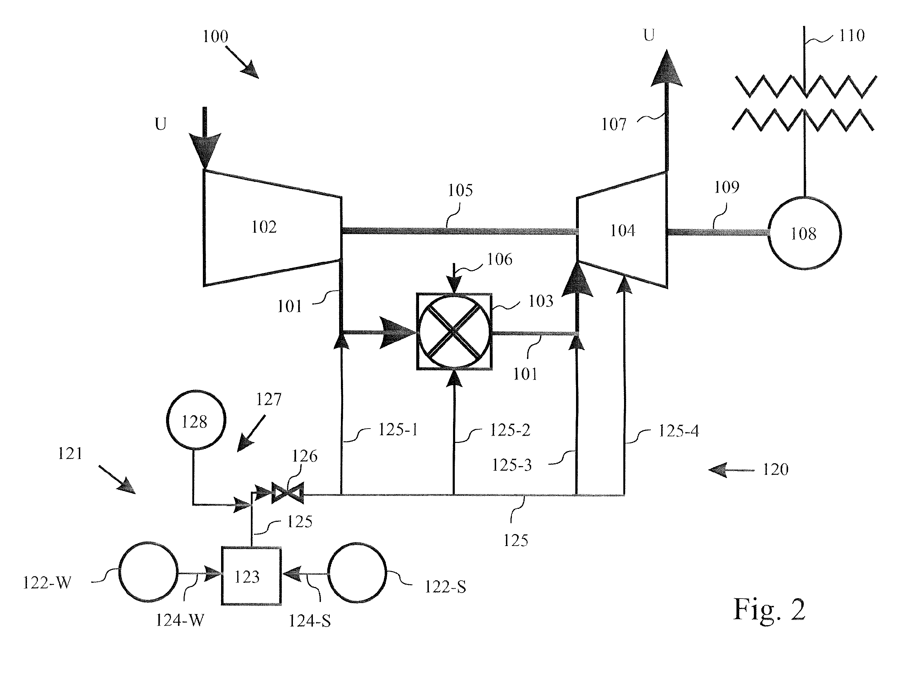

Hier setzt die Erfindung an. Figur 2 zeigt eine erfindungsgemäß ausgebildete Turbogruppe 100 mit Anfahrvorrichtung. Die dargestellte Turbogruppe kann beispielsweise Teil einer Energieerzeugungsanlage, wie zum Beispiel einer Gasturbinenanlage oder einer GuD-Kraftwerksanlage, sein.
Die in Figur 2 dargestellte Turbogruppe 100 umfasst einen mehrstufigen Verdichter 102, eine Brennkammer 103 mit Brennstoffzuleitung 106 und eine zweistufige Turbine 104 mitsamt Abgasleitung 107. Verdichter 102, Brennkammer 103 und Turbine 104 sind entlang des Strömungspfades 101 der Turbogruppe angeordnet. Ferner sind der Verdichter 102 und die Turbine 104 über eine Welle 105 miteinander drehfest antriebsverbunden. Die Turbogruppe umfasst des Weiteren einen Generator 108, der über eine Welle 109 mit der Turbine 104 antriebsverbunden ist. Während des Betriebs der Turbogruppe 100 erzeugt der Generator 108 Strom, der in ein externes Netz 110 eingespeist wird.

Zum Anfahren der Turbogruppe 100 ist der Turbogruppe des Weiteren eine Anfahrvorrichtung 120 beigeordnet. Die Anfahrvorrichtung 120 umfasst einen Dampferzeuger 121 zur Erzeugung von unter Überdruck stehendem Dampf sowie eine verschließbare Zuführleitung 125 zur Zuführung des erzeugten Dampfes in den Strömungspfad 101 der Turbogruppe 100. Hierzu ist die Zuführleitung 125 an ihrem ersten Ende mit dem Dampferzeuger 121 verbunden. An dem zweiten Ende fächert sich die Zuführleitung 125 in insgesamt vier Teilleitungen 125-1, 125-2, 125-3 und 125-4 auf, wovon jede an einer anderen Einmündungsstelle in den Strömungspfad 101 der Turbogruppe 100 einmündet. So mündet die erste Teilleitung 125-1 zwischen dem Austritt aus dem Verdichter 102 und dem Eintritt in die Brennkammer 103 in den Strömungspfad 101 ein. Die zweite Teilleitung 125-2 mündet unmittelbar in der Brennkammer 103 in den Strömungspfad 101 ein. Die dritte Teilleitung 125-3 mündet zwischen dem Austritt aus der Brennkammer 103 und dem Eintritt in die Turbine 104 und die vierte Teilleitung 125-4 zwischen der ersten und der zweiten Turbinenstufe in den Strömungspfad 101 ein. Mittels in Figur 2 nicht dargestellter Drosselschieber zur Durchflussregelung lässt sich die Aufteilung des in der Zuführleitung 125 zugeführten Dampfes auf die vier Teilleitungen 125-1, 125-2, 125-3 und 125-4 einstellen. Diese Aufteilung kann auch während des Anfahrvorgangs verändert werden.
Weiterhin ist in die Zuführleitung 125 ein Drosselschieber 126 integriert, der zweckmäßig von einer zentralen Regelungsvorrichtung (in Figur 2 nicht dargestellt) angesteuert wird. Bei ruhender Turbogruppe sowie auch bei hochgefahrener Turbogruppe ist der Drosselschieber 126 vollständig geschlossen. Der Drosselschieber 126 ist somit nur während des Anfahrens der Turbogruppe 100 geöffnet, um den in dem Dampferzeuger 121 erzeugten Dampf über die Zuführleitung 125 und die Teilleitungen 125-1, 125-2, 125-3 und 125-4 in den Strömungspfad 101 der Turbogruppe 100 einströmen zu lassen.

Der in Figur 2 dargestellte Dampferzeuger 121 umfasst einen Wasserstoff-Speicher 122-W und einen Sauerstoff-Speicher 122-S sowie einen Brenner 123 zur Verbrennung von Wasserstoff aus dem Wasserstoff-Speicher 122-W mit Sauerstoff aus dem Sauerstoff-Speicher 122-S. Der Brenner 123 ist hierzu über die Zuleitungen 124-W und 124-S mit den Speichern 122-W und 122-S verbunden. Der Wasserstoff-Speicher 122-W und der Sauerstoff-Speicher 122-S sind als Flüssiggas-Speicher ausgeführt. Wasserstoff und Sauerstoff liegen in den Speichern somit flüssig und unter Hochdruck vor. Aufgrund dessen, dass der Wasserstoff und der Sauerstoff in flüssiger Form gespeichert werden, ist für die Speicherung einer bestimmten Molmenge Wasserstoff und Sauerstoff ein erheblich geringeres Speichervolumen erforderlich, als dies erforderlich wäre, wenn dieselbe Molmenge an Druckluft oder auch gasförmigem Dampf zu speichern wäre. Zudem weist Wasser bei der Verdampfung eine hohe Expansionsrate auf.
Zum Anfahren der Turbogruppe 100 wird aus den Speichern 122-W und 122-S Wasserstoff und Sauerstoff je nach Bedarf entnommen, in den Brenner 123 eingebracht und dort in einer Wasserstoffreaktion zu Wasserdampf verbrannt. Die Regelung der Einbringung von Wasserstoff und Sauerstoff in den Brenner erfolgt mittels Drossel- und Regelungselementen, die in Figur 2 nicht dargestellt sind, die jedoch einem Fachmann geläufig sind.
Die Wasserstoffreaktion erfolgt hoch exotherm, so dass der aus dem Brenner 123 austretende Wasserdampf eine sehr hohe Temperatur von etwa 1200 K - 1300 K aufweist. Um einerseits die Temperatur des Wasserdampfes auf eine geringere Temperatur von etwa 500 K - 700 K herunterzukühlen und andererseits die Menge an bereitgestelltem Wasserdampf zusätzlich zu erhöhen, umfasst die Anfahrvorrichtung 120 ferner eine Wassereindüsungseinrichtung 127 zur geregelten Eindüsung von zusätzlichem Wasser aus einem Wasser-Vorratsbehälter 128 in die Zuführleitung 125. Mittels der Wassereindüsungseinrichtung 127 wird eine geregelte Menge an entmineralisiertem Wasser dem aus dem Brenner 123 kommenden Wasserdampf beigemischt und verdampft hierbei. Die zur Mengenregelung eingesetzte Regelungseinrichtung sowie erforderliche Drosselschieber zur Regelung der zugeführten Wassermenge sind in Figur 2 nicht dargestellt. Diese sind jedoch einem Fachmann geläufig.
Nach dem Beimischen von zusätzlichem Wasser hat der in der Zuführleitung 125 befindliche Wasserdampf eine Temperatur von etwa 500 K - 700 K.

Zum Anfahren der Turbogruppe 100 wird somit zunächst unter Überdruck stehender Wasserstoff sowie unter Überdruck stehender Sauerstoff aus den Speichern 122-W und 122-S entnommen und in den Brenner 123 eingebracht, wo der Wasserstoff mit dem Sauerstoff zu Wasserdampf verbrennt. Dem aus dem Brenner 123 kommenden Wasserdampf wird in der Zuführleitung 125 Wasser aus dem Vorratsbehälter 128 beigemischt und die Dampfmenge hierdurch erhöht. Der so erzeugte und unter Überdruck stehende Dampf wird über die Zuführleitung 125 und die Teilleitungen 125-1, 125-2, 125-3 und 125-4 in den Strömungspfad 101 der Turbogruppe 100 eingespeist. Zu Beginn des Anfahrvorgangs und im unteren Drehzahlbereich der Turbogruppe 100 wird der überwiegende Teil oder sogar die gesamte Dampfmenge vorzugsweise über die dritte oder vierte Teilleitung 125-3 und 125-4 in den Strömungspfad 101 eingespeist. Die so eingespeiste Dampfmenge entspannt über die Turbine 104, wodurch die Turbine 104 angetrieben wird. Im mittleren und oberen Drehzahlbereich des Anfahrvorgangs wird dann sukzessive auf eine Zuführung der Dampfmenge auch über die erste und zweite Teilleitung 125-1 und 125-2 umgeschaltet. Dies bietet den Vorteil, dass die über die erste und zweite Teilleitung 125-1 und 125-2 zugeführte Dampfmenge nicht unmittelbar über die Turbine 104 entspannt, sondern zuvor durch die Brennkammer 103 strömt. Die Brennkammerströmung setzt sich somit aus der Luftmenge, die von dem Verdichter gefördert wird, sowie aus der Dampfmenge, die über die erste und die zweite Teilleitung 125-1 und 125-2 zugeführt wird, zusammen. Der durch die Brennkammer 103 strömende Gesamtmassendurchsatz ist somit größer als allein der von dem Verdichter geförderte Luftmassendurchsatz. Dementsprechend kann eine Zündung oder auch eine gestufte Zündung der Brennkammer 103 frühzeitiger erfolgen als ohne Zuführung wenigstens eines Teils des Dampfes über die erste Teilleitung 125-1 oder die zweite Teilleitung 125-2. Durch ein frühzeitigeres Zünden der Brennkammer 103 läßt sich die Anfahrdauer der Turbogruppe 100 insgesamt vermindern.

Die in Figur 2 dargestellte Turbogruppe 100 sowie das zum Anfahren der Turbogruppe 100 beschriebene Verfahren stellen nur beispielhafte Ausführungsformen der Erfindung dar, die von einem Fachmann durchaus in vielfältiger Weise modifiziert werden können, ohne den Erfindungsgedanken zu verlassen. So kann die Turbogruppe beispielsweise zusätzlich einen Antriebsmotor umfassen, der zum Anfahren der Turbogruppe mit der Turbinenwelle verbunden ist. Ebenso kann auch der in Figur 2 dargestellte Generator von einem statischen Frequenzumrichter als Antriebsmotor beschaltet werden. Die Turbogruppe kann dann mittels einer kombinierten Dampfzuführung und elektromotorischem Antrieb angefahren werden. Der Anfahrvorgang der Turbogruppe kann hierdurch flexibler erfolgen. Auch kann die so angetriebene Turbogruppe während des Anfahrvorgangs auf eine höhere Drehzahl gebracht werden, ohne die Brennkammer zünden zu müssen. Alternativ könnte in diesem Fall auch der Dampferzeuger kleiner und kostengünstiger dimensioniert sein, um ein Anfahren der Turbogruppe auf weiterhin dieselbe Anfahrdrehzahl zu ermöglichen.
Ebenso ist aber auch eine Kombination der erfindungsgemäßen Anfahrvorrichtung bzw. des erfindungsgemäßen Anfahrverfahrens mit anderen, aus dem Stand der Technik bekannten Anfahrvorrichtungen und -verfahren möglich.

### Bezugszeichenliste

- U: Umgebung

- 1: Gasturbinenanlage
- 2: Verdichter
- 3: Brennkammer
- 4: Turbine
- 5: Welle zwischen Verdichter und Turbine
- 6: Brennstoffzuleitung
- 7: Abgasleitung
- 8: Generator
- 9: Welle zwischen Turbine und Generator
- 10: Netz
- 11: Stromversorgungsaggregat
- 12: Drucklufteinblasevorrichtung
- 13: Reservoir
- 14: Kompressor
- 15: Befüllleitung
- 16: Drosselschieber
- 17: Verbindungsleitung
- 18: Drosselschieber

- 100: erfindungsgemäß ausgebildete Turbogruppe mit Anfahrvorrichtung
- 101: Strömungspfad der Turbogruppe
- 102: Verdichter
- 103: Brennkammer
- 104: Turbine
- 105: Welle zwischen Verdichter und Turbine
- 106: Brennstoffzuleitung
- 107: Abgasleitung
- 108: Generator
- 109: Welle zwischen Turbine und Generator
- 110: Netz
- 120: Anfahrvorrichtung
- 121: Dampferzeuger
- 122-W: Wasserstoff-Speicher
- 122-S: Sauerstoff-Speicher
- 123: Brenner
- 124-W, 124-S: Zuleitungen
- 125: Zuführleitung
- 125-1, 125-2,:
- 125-3, 125-4: Teilleitungen
- 126: Drosselschieber
- 127: Wassereindüsungseinrichtung
- 128: Wasservorratsbehälter

## Patentansprüche

1. Turbogruppe (100) umfassend einen Verdichter (102), eine Brennkammer (103) und eine Turbine (104), wobei Verdichter (102), Brennkammer (103) und Turbine (104) entlang eines Strömungspfades (101) angeordnet sind, und mit einer Anfahrvorrichtung (120) zum Anfahren der Turbogruppe (100), **dadurch gekennzeichnet, dass**
die Anfahrvorrichtung (120) einen Dampferzeuger (121) zur Erzeugung von unter Überdruck stehendem Dampf und eine Zuführleitung (125), die an einem ersten Ende mit dem Dampferzeuger (121) verbunden ist und an einem zweiten Ende in den Strömungspfad (101) der Turbogruppe (100) einmündet, umfasst.

2. Turbogruppe gemäss Anspruch 1, **dadurch gekennzeichnet, dass** die Zuführleitung (125) stromab des Verdichters (102) in den Strömungspfad (101) der Turbogruppe (100) einmündet.

3. Turbogruppe gemäss Anspruch 2, **dadurch gekennzeichnet, dass** die Zuführleitung (125) zwischen dem Austritt aus dem Verdichter (102) und dem Eintritt in die Brennkammer (103) in den Strömungspfad (101) einmündet.

4. Turbogruppe gemäss Anspruch 2 oder 3, **dadurch gekennzeichnet, dass** die Zuführleitung (125) in die Brennkammer (103) einmündet.

5. Turbogruppe gemäss einem der vorhergehenden Ansprüche 2 bis 4, **dadurch gekennzeichnet, dass** die Zuführleitung (125) zwischen dem Austritt aus der Brennkammer (103) und dem Eintritt in die Turbine (104) in den Strömungspfad (101) einmündet.

6. Turbogruppe gemäss einem der vorhergehenden Ansprüche 2 bis 5, **dadurch gekennzeichnet, dass** die Turbine (104) wenigstens eine erste Turbinenstufe und eine zweite Turbinenstufe umfasst und die Zuführleitung (125) zwischen der ersten und der zweiten Turbinenstufe in den Strömungspfad (101) einmündet.

7. Turbogruppe gemäss einem der vorhergehenden Ansprüche, **dadurch gekennzeichnet, dass** der Dampferzeuger (121) einen Wasserstoff-Speicher (122-W) und einen Sauerstoff-Speicher (122-S) sowie einen Brenner (123) zur Verbrennung von Wasserstoff aus dem Wasserstoff-Speicher mit Sauerstoff aus dem Sauerstoff-Speicher umfasst.

8. Turbogruppe gemäss Anspruch 7, **dadurch gekennzeichnet, dass** die Anfahrvorrichtung (120) zusätzlich eine Wassereindüsungseinrichtung (127) zur geregelten Eindüsung von zusätzlichem Wasser in die Zuführleitung (125) umfasst.

9. Turbogruppe gemäss einem der vorhergehenden Ansprüchen, **dadurch gekennzeichnet, dass** die Zuführleitung (125) verschließbar ist.

10. Verfahren zum Anfahren einer Turbogruppe mit einem Verdichter, einer Brennkammer und einer Turbine, wobei Verdichter, Brennkammer und Turbine entlang eines Strömungspfades angeordnet sind, umfassend, unter Überdruck stehenden Dampf zu erzeugen und den Dampf stromab des Verdichters in den Strömungspfad der Turbogruppe zuzuführen.

11. Verfahren gemäss Anspruch 10, weiterhin umfassend, den Dampf durch Verbrennung von Wasserstoff mit Sauerstoff zu erzeugen.

12. Verfahren gemäss einem der Ansprüche 10 oder 11, weiterhin umfassend, dem Dampf vor der Zuführung in den Strömungspfad der Turbogruppe zusätzlich Wasser zuzuführen.
